# EUROPEAN PATENT APPLICATION

(11) **EP 2 654 237 A1**
(43) Date of publication of application: **23.10.2013**
(21) Application number: 11856128.1
(22) Date of filing: 26.12.2011
(51) Int. Cl.: H04L 5/02, H04L 27/26

(54) **USAGE OF DISCRETE SPECTRUM IN ORTHOGONAL FREQUENCY DIVISION MULTIPLEXING SYSTEM, AND RECEIVING METHOD AND APPARATUS USING DISCRETE SPECTRUM**

(30) Priority: 20.01.2011 CN 201110023113
(71) Applicant: Huawei Technologies Co., Ltd., Shenzhen, Guangdong 518129 (CN)
(72) Inventor: HU, Aihua, Shenzhen Guangdong 518129 (CN)
(74) Representative: Körber, Martin Hans
(86) International application number: PCT/CN2011/084604
(87) International publication number: WO 2012/097662

(57) **Abstract**

Embodiments of the present invention disclose the usage of discrete frequency spectrum in an orthogonal frequency division multiplexing system and receiving method and apparatus using discrete frequency spectrum, which relate to the communications field and improve the utilization efficiency of the discrete frequency spectrum. The method includes: creating one carrier wave having a bandwidth that is greater than or equal to a bandwidth of discrete frequency spectrum to be used; mapping sub-carrier waves of the carrier wave respectively to each sub-discrete frequency spectrum; and forming an Xth carrier signal from the sub-carrier wave corresponding to each sub-discrete frequency spectrum and sending the Xth carrier signal to a terminal by using a radio frequency module. The method is primarily applicable to the use of discrete frequency spectrum.

## Description

This application claims priority to Chinese Patent Application No. 201110023113.X, filed with the Chinese Patent Office on January 20, 2011 and entitled "USAGE OF DISCRETE FREQUENCY SPECTRUM IN ORTHOGONAL FREQUENCY DIVISION MULTIPLEXING SYSTEM AND RECEIVING METHOD AND APPARATUS USING DISCRETE FREQUENCY SPECTRUM", which is incorporated herein by reference in its entirety.

### FIELD OF THE INVENTION

The present invention relates to the communications field, and in particular, to the usage of discrete frequency spectrum in an orthogonal frequency division multiplexing system and a receiving method and apparatus using discrete frequency spectrum.

### BACKGROUND OF THE INVENTION

A dynamic frequency spectrum allocation/access technology allows a system to dynamically set a size of an access bandwidth and a frequency band. As wireless services keep increasing, wireless frequency spectrum resources are becoming scarcer and scarcer, and the dynamic frequency spectrum allocation/access of continuous frequency spectrum cannot satisfy service requirements of a system any longer. As a result, attention is given to the allocation/access of discrete frequency spectrum resources.

The aggregation of discrete frequency spectrums may better satisfy service requirements. However, too many frequency spectrum fragments require a complex device for implementation. In addition, to avoid out-of-band interference between different systems, a guard band needs to be set to suppress interference between frequency bands. However, the introduction of the guard band decreases the utilization rate of the frequency spectrum.

For example, LTE uses discrete frequency spectrum resources by using a multi-carrier aggregation technology. Specifically, a carrier wave is created on each discrete frequency spectrum, where multiple carrier waves are presented on a physical layer, and the multiple carrier waves are logically combined into one carrier wave. For example, a carrier operator has two bands of discrete frequency spectrums 5 MHz and 10 MHz, which are separated by a 10 MHz frequency spectrum. The LTE creates a carrier wave of a 5 MHz bandwidth and a carrier wave of a 10 MHz bandwidth respectively for the two discrete frequency spectrums, and then uses the multi-carrier aggregation technology (defined in the LTE-A protocol) to logically use them as one carrier wave.

When discrete frequency spectrum resources are used by using the above solution, the created multiple carrier waves require separate public channels such as paging channels, where the utilization rate of the frequency spectrum for one carrier wave is low; in addition, the created multiple carrier waves are scheduled separately, where it is complicated for coordination and the efficiency is low.

### SUMMARY OF THE INVENTION

Embodiments of the present invention provide the use of discrete frequency spectrum in an orthogonal frequency division multiplexing system and a receiving method and apparatus using discrete frequency spectrum, which are capable of improving the utilization efficiency of the discrete frequency spectrum.

To achieve the above objective, embodiments of the present invention adopt the following technical solutions.

A method of using discrete frequency spectrum in an orthogonal frequency division multiplexing system includes:
creating one carrier wave having a bandwidth that is greater than or equal to a bandwidth of discrete frequency spectrum to be used;
mapping sub-carrier waves of the carrier wave respectively to each sub-discrete frequency spectrum;
forming an Xth carrier signal from the sub-carrier wave corresponding to each sub-discrete frequency spectrum, where X is a nonzero natural number; and
sending the Xth carrier signal to a terminal.

A receiving method of using discrete frequency spectrum in an orthogonal frequency division multiplexing system includes:
receiving an Xth carrier signal, where the Xth carrier signal is formed from a continuous Ath sub-carrier wave of one carrier wave, and A is a nonzero natural number;
obtaining a time-domain component of each sub-discrete frequency spectrum from the Xth carrier signal;
combining the obtained time-domain component of each sub-discrete frequency spectrum into an Nth digital signal by performing a frequency shift operation; and
demodulating the Nth digital signal to obtain a signal borne by the Ath sub-carrier wave.

An apparatus of using discrete frequency spectrum in an orthogonal frequency division multiplexing system includes:
a creating unit, configured to create one carrier wave having a bandwidth that is greater than or equal to a bandwidth of discrete frequency spectrums to be used;
a mapping unit, configured to map sub-carrier waves of the carrier wave respectively to each sub-discrete frequency spectrum;
a forming unit, configured to form an Xth carrier signal from the sub-carrier wave corresponding to each sub-discrete frequency spectrum, where X is a nonzero natural number; and
a sending unit, configured to send the Xth carrier signal to a terminal.

A receiving apparatus of using discrete frequency spectrum in an orthogonal frequency division multiplexing system includes:
a first receiving unit, configured to receive an Xth carrier signal, where the Xth carrier signal is formed from a continuous Ath sub-carrier wave of one carrier wave, and A is a nonzero natural number;
an obtaining unit, configured to obtain a time-domain component of each sub-discrete frequency spectrum from the Xth carrier signal;
a combining unit, configured to combine the obtained time-domain component of each sub-discrete frequency spectrum into an Nth digital signal by performing a frequency shift operation; and
a demodulating unit, configured to demodulate the Nth digital signal to obtain a signal borne by the Ath sub-carrier wave.

In the method and apparatus of using discrete frequency spectrum in an orthogonal frequency division multiplexing system according to the embodiments of the present invention, only one carrier wave is created for discrete frequency spectrum to be used, and each continuous sub-carrier wave of the carrier wave is respectively mapped to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

### BRIEF DESCRIPTION OF THE DRAWINGS

In order to illustrate the technical solutions in embodiments of the present invention more clearly, accompanying drawings needed in the embodiments are illustrated briefly below. It is evident that the accompanying drawings are only some embodiments of the present invention, and persons of ordinary skill in the art may obtain other drawings according to the accompanying drawings without creative efforts.
FIG. 1 is a flowchart of a method of using discrete frequency spectrum in an orthogonal frequency division multiplexing system according to an embodiment of the present invention;
FIG. 2 is a schematic diagram illustrating that a base station forms an Xth carrier signal from a sub-carrier wave corresponding to each sub-discrete frequency spectrum according to an embodiment of the present invention;
FIG. 3 is a flowchart of a receiving method using discrete frequency spectrum in an orthogonal frequency division multiplexing system according to an embodiment of the present invention;
FIG. 4 is a schematic diagram illustrating that a base station combines each obtained sub-discrete frequency spectrum into a Kth digital signal by performing a frequency shift operation;
FIG. 5 is a flowchart of a method of using discrete frequency spectrum in an orthogonal frequency division multiplexing system according to another embodiment of the present invention;
FIG. 6 is a flowchart of a receiving method using discrete frequency spectrum in an orthogonal frequency division multiplexing system according to an embodiment of the present invention;
FIG. 7 is a flowchart of a method of using discrete frequency spectrum in an orthogonal frequency division multiplexing system according to another embodiment of the present invention;
FIG. 8 is a flowchart of a receiving method using discrete frequency spectrum in an orthogonal frequency division multiplexing system according to another embodiment of the present invention;
FIG. 9 is a structural diagram of an apparatus of using discrete frequency spectrum in an orthogonal frequency division multiplexing system according to an embodiment of the present invention;
FIG. 10 is a structural diagram of a receiving apparatus using discrete frequency spectrum in an orthogonal frequency division multiplexing system according to an embodiment of the present invention;
FIG. 11 is a structural diagram of an apparatus of using discrete frequency spectrum in an orthogonal frequency division multiplexing system according to another embodiment of the present invention;
FIG. 12 is a structural diagram of a receiving apparatus using discrete frequency spectrum in an orthogonal frequency division multiplexing system according to an embodiment of the present invention;
FIG. 13 is a structural diagram of a receiving apparatus using discrete frequency spectrum in an orthogonal frequency division multiplexing system according to another embodiment of the present invention; and
FIG. 14 is a structural diagram of a system using discrete frequency spectrum in an orthogonal frequency division multiplexing system according to an embodiment of the present invention.

### DETAILED DESCRIPTION OF THE EMBODIMENTS

The technical solutions in embodiments of the present invention will be clearly and comprehensively described in the following with reference to the accompanying drawings in the embodiments of the present invention. Obviously, the embodiments to be described are only a part rather than all of the embodiments of the present invention. Based on the embodiments of the present invention, all other embodiments obtained by persons of ordinary skill in the art without creative efforts shall fall within the protection scope of the present invention.

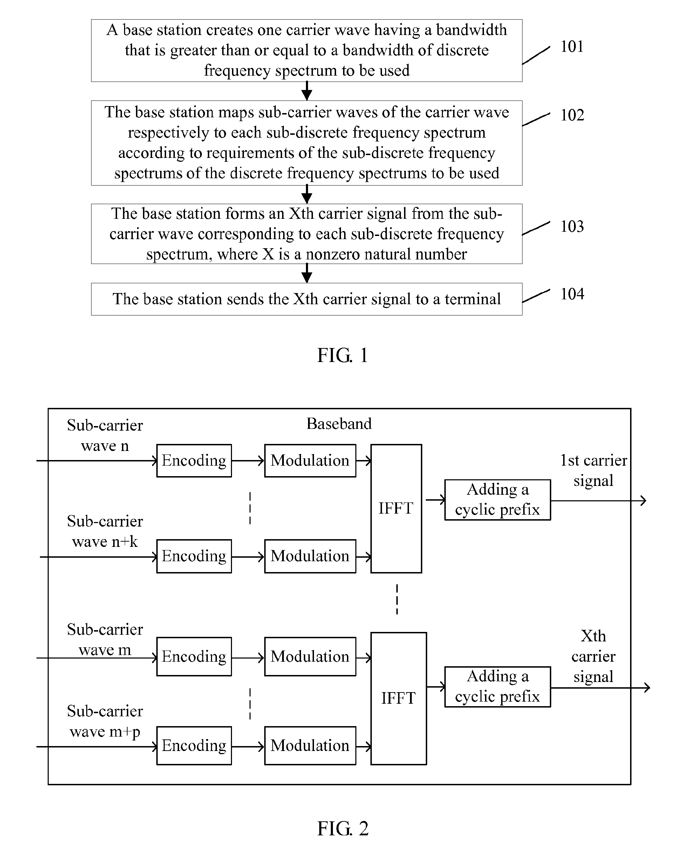

An embodiment of the present invention provides a method of using discrete frequency spectrum in an orthogonal frequency division multiplexing system, which, as shown in FIG. 1, includes the following steps.
101. A base station creates one carrier wave having a bandwidth that is greater than or equal to a bandwidth of discrete frequency spectrum to be used.

To improve the utilization rate of frequency spectrum, only one carrier wave needs to be created for the discrete frequency spectrum to be used. To satisfy requirements of the discrete frequency spectrum to be used, firstly, the base station needs to create one carrier wave having a bandwidth that is greater than or equal to the bandwidth of the discrete frequency spectrum to be used.
102. The base station maps sub-carrier waves of the carrier wave respectively to each sub-discrete frequency spectrum.

The base station segments the carrier wave into sub-carrier waves according to requirements of sub-discrete frequency spectrums of the discrete frequency spectrum to be used, where a bandwidth of each sub-carrier wave needs to be greater than or equal to a bandwidth of a corresponding sub-discrete frequency spectrum.

To satisfy the requirements of each sub-discrete frequency spectrum, each sub-carrier wave is mapped to a corresponding sub-discrete frequency spectrum.
103. The base station forms an Xth carrier signal from the sub-carrier wave corresponding to each sub-discrete frequency spectrum, where X is a nonzero natural number.

As shown in FIG. 2, a baseband physical layer encodes and modulates a signal borne by each sub-carrier wave corresponding to each sub-discrete frequency spectrum, obtains a frequency-domain component of each sub-carrier wave corresponding to each sub-discrete frequency spectrum after the encoding and modulation operation, and then forms an Xth carrier signal from frequency-domain components of the sub-carrier waves by using the Inverse Fast Fourier Transform algorithm (Inverse Fast Fourier Transform Algorithm, IFFT), where X is a nonzero natural number.
104. The base station sends the Xth carrier signal to a terminal by using a radio frequency module.

The baseband physical layer sends the formed Xth carrier signal to the terminal by using the radio frequency module.

In the method of using discrete frequency spectrum in an orthogonal frequency division multiplexing system according to this embodiment of the present invention, only one carrier wave is created for discrete frequency spectrum to be used, and each continuous sub-carrier wave of the carrier wave is respectively mapped to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

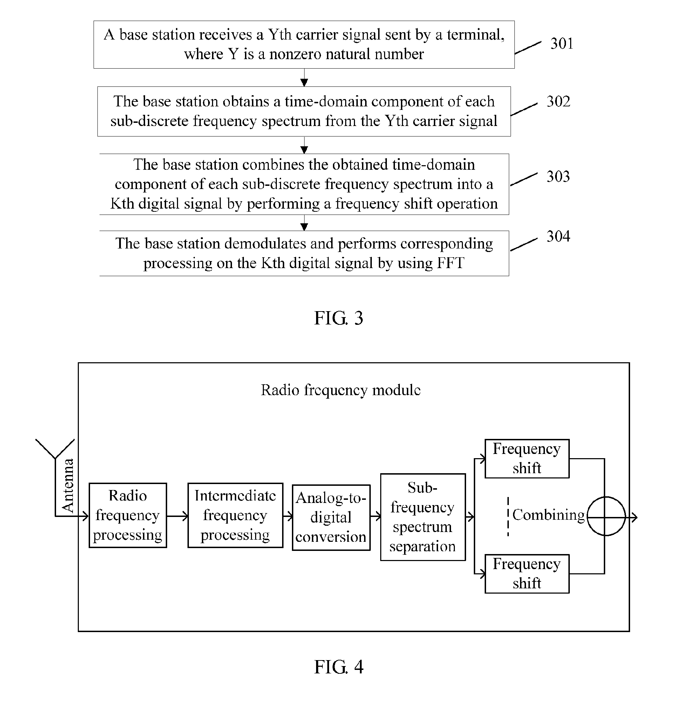

An embodiment of the present invention provides a receiving method using discrete frequency spectrum in an orthogonal frequency division multiplexing system, which, as shown in FIG. 3, includes the following steps.
301. A base station receives a Yth carrier signal sent by a terminal, where Y is a nonzero natural number.

In this step, the base station may receive the Yth carrier signal sent by the terminal by using a radio frequency module, and then perform operations such as radio frequency processing, intermediate frequency processing, and analog-to-digital conversion on the Yth carrier signal.
302. The base station obtains a time-domain component of each sub-discrete frequency spectrum from the Yth carrier signal.
303. The base station combines the obtained time-domain component of each sub-discrete frequency spectrum into a Kth digital signal by performing a frequency shift operation.

As shown in FIG. 4, the radio frequency module of the base station obtains each sub-discrete frequency spectrum from the Yth carrier signal, and then combines each obtained sub-discrete frequency spectrum into the Kth digital signal by performing a frequency shift operation.
304. The base station demodulates and performs corresponding processing on the Kth digital signal by using the FFT (Fast Fourier Transform Algorithm, Fast Fourier Transform algorithm).

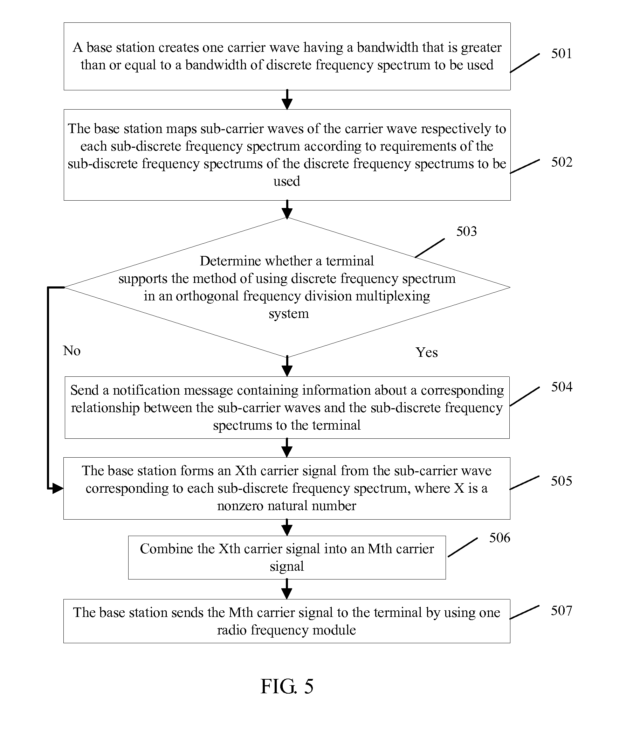

An embodiment of the present invention provides another method of using discrete frequency spectrum in an orthogonal frequency division multiplexing system, which, as shown in FIG. 5, includes the following steps.
501. A base station creates one carrier wave having a bandwidth that is greater than or equal to a bandwidth of discrete frequency spectrum to be used.

To improve the utilization rate of frequency spectrums, only one carrier wave needs to be created for the discrete frequency spectrum to be used. To satisfy requirements of the discrete frequency spectrum to be used, firstly, the base station needs to create one carrier wave having a bandwidth that is greater than or equal to a bandwidth of the discrete frequency spectrum to be used.
502. The base station maps sub-carrier waves of the carrier wave respectively to each sub-discrete frequency spectrum.

The base station segments the carrier wave into sub-carrier waves according to requirements of sub-discrete frequency spectrums of the discrete frequency spectrum to be used, where a bandwidth of each sub-carrier wave needs to be greater than or equal to a bandwidth of a corresponding sub-discrete frequency spectrum.

To satisfy the requirements of each sub-discrete frequency spectrum, each sub-carrier wave is mapped to a corresponding sub-discrete frequency spectrum.

When the bandwidth of the created carrier wave is greater than the total bandwidth of the discrete frequency spectrum, those of the sub-carrier waves that exceed the bandwidth of the discrete frequency spectrum do not need to be mapped to the discrete frequency spectrum, and do not need to be scheduled.
503. Determine whether the terminal supports the method of using discrete frequency spectrum in an orthogonal frequency division multiplexing system.

Whether the terminal supports the method of using discrete spectrum in an orthogonal frequency division multiplexing system may be determined according to terminal version information.

To determine whether the terminal supports the method of using discrete frequency spectrum in an orthogonal frequency division multiplexing system, before the determining step, the following steps may further be included: sending a query message for querying terminal version information; and receiving a response message containing the terminal version information.

Considering different versions of terminals, not all terminals support the method of using discrete frequency spectrum in an orthogonal frequency division multiplexing system according to embodiments of the present invention. Therefore, operation steps are different for terminals that support the method of using discrete frequency spectrum in an orthogonal frequency division multiplexing system according to embodiments of the present invention and terminals that do not support the method of using discrete frequency spectrum in an orthogonal frequency division multiplexing system according to embodiments of the present invention.

When the terminal supports the method of using discrete frequency spectrum in an orthogonal frequency division multiplexing system, the terminal is scheduled preferentially on a sub-discrete frequency spectrum where a non-control channel is located. The terminal needs to obtain a corresponding relationship between the sub-carrier waves and the sub-discrete frequency spectrums, thereby determining the sub-discrete frequency spectrum where the non-control channel is located and which is to be used preferentially according to the corresponding relationship between the sub-carrier waves and the sub-discrete frequency spectrums. Therefore, step 504 needs to be performed.

When the terminal does not support the method of using the discrete frequency spectrums in the orthogonal frequency-division multiplexing system, the terminal is scheduled only on a sub-discrete frequency spectrum where a control channel is located. The terminal may determine the sub-discrete frequency spectrum where the control channel is located without obtaining a corresponding relationship between the sub-carrier waves and the sub-discrete frequency spectrums. Therefore, step 505 may be directly performed.

Further, when the terminal supports the method of using the discrete frequency spectrums in the orthogonal frequency-division multiplexing system, step 504 is performed; otherwise, step 505 is performed.
504. Send a notification message containing information about the corresponding relationship between the sub-carrier waves and the sub-discrete frequency spectrums to the terminal.

To enable the terminal to obtain the corresponding relationship between the sub-carrier waves and the discrete frequency spectrums, the notification message containing the information about the corresponding relationship between the sub-carrier waves and the sub-discrete frequency spectrums needs to be sent to the terminal.
505. The base station forms an Xth carrier signal from the sub-carrier wave corresponding to each sub-discrete frequency spectrum, where X is a nonzero natural number.

As shown in FIG. 2, a baseband physical layer encodes and modulates each sub-carrier wave corresponding to each sub-discrete frequency spectrum, obtains each sub-carrier wave corresponding to each sub-discrete frequency spectrum after the encoding and modulation operation, and then forms an Xth carrier signal from the sub-carrier waves by using the Inverse Fast Fourier Transform algorithm (Inverse Fast Fourier Transform Algorithm, IFFT), where X is a nonzero natural number.
506. Combine the Xth carrier signal into an Mth carrier signal.

If each Xth carrier signal is respectively sent by one radio frequency module, correspondingly, multiple radio frequency modules need to be set, where the cost is high. To reduce the cost, all Xth carrier signals may be combined into one path of Mth carrier signal, so that all Xth carrier signals may be sent by using one radio frequency module.
507. The base station sends the Mth carrier signal to the terminal by using one radio frequency module.

Because all Xth carrier signals are combined into one path of Mth carrier signal and the Mth carrier signal may be sent by using only one radio frequency module, the number of radio frequency modules in use is reduced, thereby reducing the cost.

In the method of using discrete frequency spectrum in an orthogonal frequency division multiplexing system according to this embodiment of the present invention, only one carrier wave is created for discrete frequency spectrum to be used, and each continuous sub-carrier wave of the carrier wave is respectively mapped to each sub-discrete frequency spectrum to be used. Because only one carrier wave is created, only one set of public channels such as a paging channel is required, which improves the utilization rate of frequency spectrum; in addition, creating only one carrier wave simplifies the scheduling operation. In addition, in the embodiment, whether the terminal supports the method of using discrete frequency spectrum may be determined according to terminal version information, and different scheduling methods may be performed for the terminal.

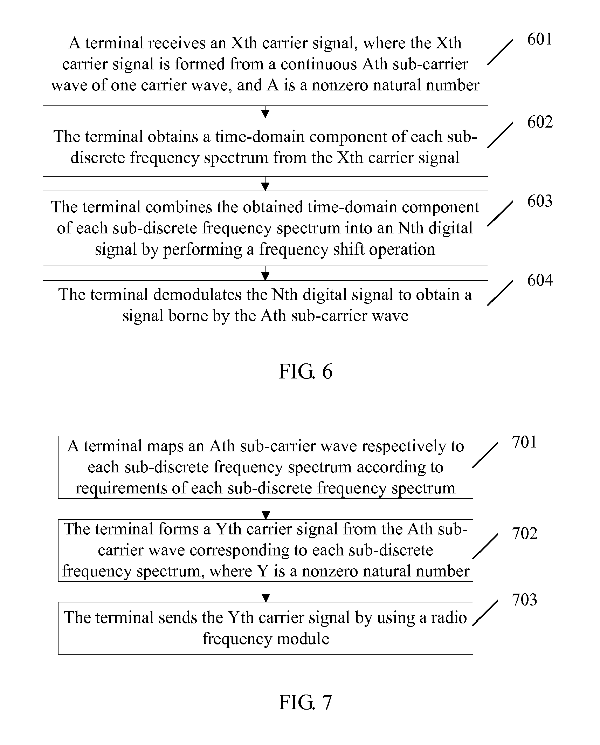

An embodiment of the present invention provides a receiving method using discrete frequency spectrum in an orthogonal frequency division multiplexing system, which, as shown in FIG. 6, includes the following steps.
601. A terminal receives an Xth carrier signal, where the Xth carrier signal is formed from a continuous Ath sub-carrier wave of one carrier wave, and A is a nonzero natural number.

After a base station sends the Xth carrier signal, the terminal receives the Xth carrier signal, where the Xth carrier signal is formed from a continuous Ath sub-carrier wave of one carrier wave, and A is a nonzero natural number. Each carrier signal in the Xth carrier signal is a carrier signal of one sub-discrete frequency spectrum in discrete frequency spectrum used by the base station.
602. The terminal obtains a time-domain component of each sub-discrete frequency spectrum from the Xth carrier signal.

To use the discrete frequency spectrum in the Xth carrier signal, the terminal needs to obtain each sub-discrete frequency spectrum from the Xth carrier signal.
603. The terminal combines the obtained time-domain component of each sub-discrete frequency spectrum into an Nth digital signal by performing a frequency shift operation.

After obtaining time-domain components of all sub-discrete frequency spectrums, the terminal combines all time-domain components of the sub-discrete frequency spectrums into a time-domain component of a continuous frequency spectrum, and then generates the Nth digital signal.
604. The terminal demodulates the Nth digital signal to obtain a signal borne by the Ath sub-carrier wave.

To re-allocate the Ath sub-carrier wave, the terminal needs to demodulate the Nth digital signal to obtain the signal borne by the Ath sub-carrier wave.

In the receiving method using discrete frequency spectrum in an orthogonal frequency division multiplexing system according to the embodiment, a terminal receives an Xth carrier signal that is formed from a continuous Ath sub-carrier wave of one carrier wave. That is, a base station creates only one carrier wave for discrete frequency spectrum in use, and maps each continuous sub-carrier wave of the carrier wave respectively to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

An embodiment of the present invention provides a method of using discrete frequency spectrum in an orthogonal frequency division multiplexing system, which, as shown in FIG. 7, includes the following steps.
701. A terminal maps an Ath sub-carrier wave respectively to each sub-discrete frequency spectrum according to requirements of each sub-discrete frequency spectrum.

The terminal segments the Ath sub-carrier wave according to requirements of sub-discrete frequency spectrums of discrete frequency spectrums to be used, where a bandwidth of each Ath sub-carrier wave needs to be greater than or equal to a bandwidth of a corresponding sub-discrete frequency spectrum.

To satisfy the requirements of each sub-discrete frequency spectrum, each Ath sub-carrier wave is mapped to a corresponding sub-discrete frequency spectrum.
702. The terminal forms a Yth carrier signal from the Ath sub-carrier wave corresponding to each sub-discrete frequency spectrum, where Y is a nonzero natural number.
703. The terminal sends the Yth carrier signal by using a radio frequency module.

In the method of using discrete frequency spectrum in an orthogonal frequency division multiplexing system according to the embodiment, a terminal maps each sub-carrier wave respectively to each sub-discrete frequency spectrum, where each sub-carrier wave belongs to the same carrier wave. Because only one carrier wave is used, only one set of public channels such as paging channels is required, which improves the utilization rate of frequency spectrum, and simplifies the scheduling operation by using only one carrier wave.

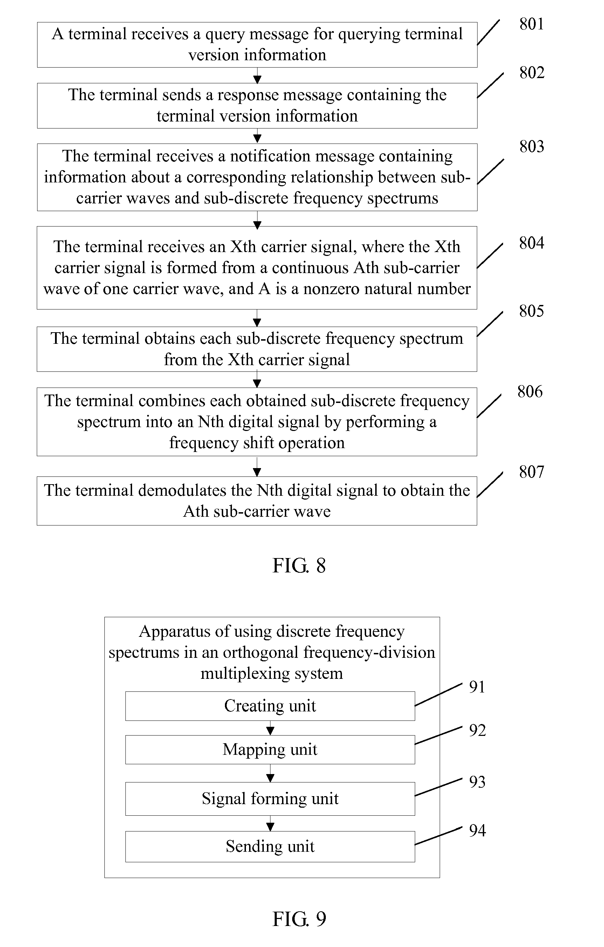

An embodiment of the present invention provides another receiving method using discrete frequency spectrum in an orthogonal frequency division multiplexing system, which, as shown in FIG. 8, includes the following steps.
801. A terminal receives a query message for querying terminal version information.

To determine whether the terminal supports a method of using discrete frequency spectrum in an orthogonal frequency division multiplexing system, a base station may send the query message for querying the terminal version information to the terminal.
802. The terminal sends a response message containing the terminal version information.

After receiving the query message of the base station, the terminal sends the response message containing the terminal version information to the base station.
803. The terminal receives a notification message containing information about a corresponding relationship between sub-carrier waves and sub-discrete frequency spectrums.

When the base station determines that the terminal supports the method of using discrete frequency spectrum in an orthogonal frequency division multiplexing system, the base station may send the notification message containing the information about the corresponding relationship between the sub-carrier waves and the sub-discrete frequency spectrums to the terminal. The terminal receives the notification message containing the information about the corresponding relationship between the sub-carrier waves and the sub-discrete frequency spectrums.
804. The terminal receives an Xth carrier signal, where the Xth carrier signal is formed from a continuous Ath sub-carrier wave of one carrier wave, and A is a nonzero natural number.

After the base station sends the Xth carrier signal, the terminal receives the Xth carrier signal, where the Xth carrier signal is formed from a continuous Ath sub-carrier wave of one carrier wave, and A is a nonzero natural number. Each carrier signal in the Xth carrier signal is a carrier signal of one sub-discrete frequency spectrum in discrete frequency spectrum to be used.
805. The terminal obtains a time-domain component of each sub-discrete frequency spectrum from the Xth carrier signal.

To use the discrete frequency spectrum in the Xth carrier signal, the terminal needs to obtain each sub-discrete frequency spectrum from the Xth carrier signal.
806. The terminal combines the obtained time-domain component of each sub-discrete frequency spectrum into an Nth digital signal by performing a frequency shift operation.

After obtaining all sub-discrete frequency spectrums, the terminal combines all sub-discrete frequency spectrums into one continuous frequency spectrum, and then generates the Nth digital signal.
807. The terminal demodulates the Nth digital signal to obtain a signal borne by the Ath sub-carrier wave.

To re-allocate the Ath sub-carrier wave, the terminal needs to demodulate the Nth digital signal to obtain the Ath sub-carrier wave.

In the receiving method using discrete frequency spectrum in an orthogonal frequency division multiplexing system according to the embodiment, a terminal receives an Xth carrier signal that is formed from a continuous Ath sub-carrier wave of one carrier wave. That is, a base station creates only one carrier wave for discrete frequency spectrum to be used, and maps each continuous sub-carrier wave of the carrier wave respectively to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

An embodiment of the present invention provides an apparatus of using discrete frequency spectrum in an orthogonal frequency division multiplexing system, which, as shown in FIG. 9, includes a creating unit 91, a mapping unit 92, a signal forming unit 93, and a sending unit 94;
where the creating unit 91 is configured to create one carrier wave having a bandwidth that is greater than or equal to a bandwidth of discrete frequency spectrum to be used;
the mapping unit 92 is configured to map sub-carrier waves of the carrier wave respectively to each sub-discrete frequency spectrum;
the signal forming unit 93 is configured to form an Xth carrier signal from the sub-carrier wave corresponding to each sub-discrete frequency spectrum, where X is a nonzero natural number; and
the sending unit 94 is configured to send the Xth carrier signal to a terminal.

For the apparatus of using discrete frequency spectrum in an orthogonal frequency division multiplexing system according to the embodiment, a base station creates only one carrier wave for discrete frequency spectrum to be used, and each continuous sub-carrier wave of the carrier wave is respectively mapped to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

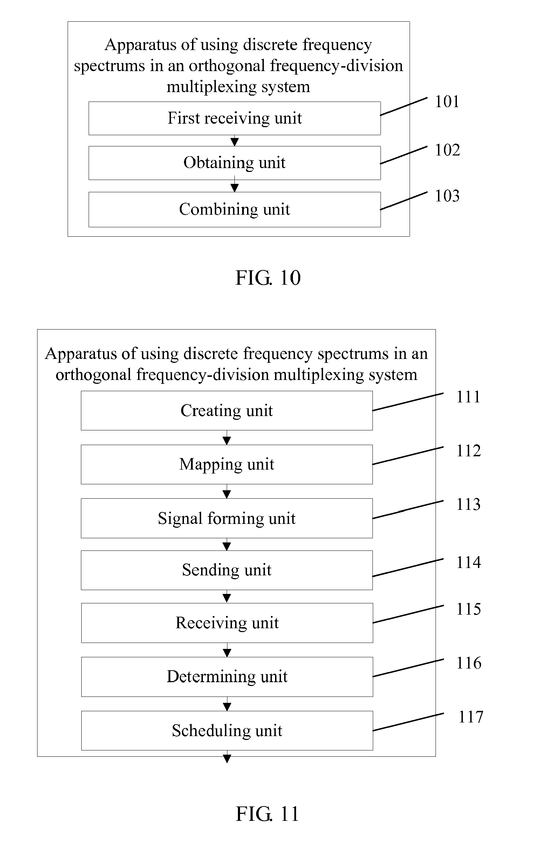

An embodiment of the present invention provides a receiving apparatus using discrete frequency spectrum in an orthogonal frequency division multiplexing system, which, as shown in FIG. 10, includes a first receiving unit 101, an obtaining unit 102, and a combining unit 103; where
the first receiving unit 101 is configured to receive a Yth carrier signal sent by a terminal, where Y is a nonzero natural number;
the obtaining unit 102 is configured to obtain each sub-discrete frequency spectrum from the Yth carrier signal; and
the combining unit 103 is configured to combine each obtained sub-discrete frequency spectrum into a Kth digital signal by performing a frequency shift operation.

An embodiment of the present invention provides another apparatus of using discrete frequency spectrum in an orthogonal frequency division multiplexing system, which, as shown in FIG. 11, includes a creating unit 111, a mapping unit 112, a signal forming unit 113, a sending unit 114; a receiving unit 115, a determining unit 116, and a scheduling unit 117.
where the creating unit 111 is configured to create one carrier wave having a bandwidth that is greater than or equal to a bandwidth of discrete frequency spectrums to be used;
the mapping unit 112 is configured to map sub-carrier waves of the carrier wave respectively to each sub-discrete frequency spectrum according to requirements of the sub-discrete frequency spectrums of the discrete frequency spectrums to be used, which may specifically include mapping a control channel of the carrier wave to a sub-discrete frequency spectrum having a biggest bandwidth among the sub-discrete frequency spectrums;
the signal forming unit 113 is configured to form an Xth carrier signal from the sub-carrier wave corresponding to each sub-discrete frequency spectrum, where X is a nonzero natural number;
the sending unit 114 is configured to send a query message for querying terminal version information to a terminal;
the receiving unit 115 is configured to receive a response message containing the terminal version information sent by the terminal;
the determining unit 116 is configured to determine whether the terminal supports the method of using discrete frequency spectrum in an orthogonal frequency division multiplexing system according to terminal version information; and
the scheduling unit 117 is configured to, when the terminal supports the method of using discrete frequency spectrum in an orthogonal frequency division multiplexing system, schedule the terminal preferentially on a sub-discrete frequency spectrum where a non-control channel is located; and
when the terminal does not support the method of using discrete frequency spectrum in an orthogonal frequency division multiplexing system, schedule the terminal only on a sub-discrete frequency spectrum where a control channel is located; where
when the terminal supports the method of using discrete frequency spectrum in an orthogonal frequency division multiplexing system, the sending unit 114 is further configured to send a notification message containing information about a corresponding relationship between the sub-carrier waves and the sub-discrete frequency spectrums to the terminal; and
the sending unit 114 is further configured to send the Xth carrier signal to the terminal by using one radio frequency module.

For the apparatus of using discrete frequency spectrum in an orthogonal frequency division multiplexing system according to the embodiment, a base station creates only one carrier wave for discrete frequency spectrum to be used, and each continuous sub-carrier wave of the carrier wave is respectively mapped to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

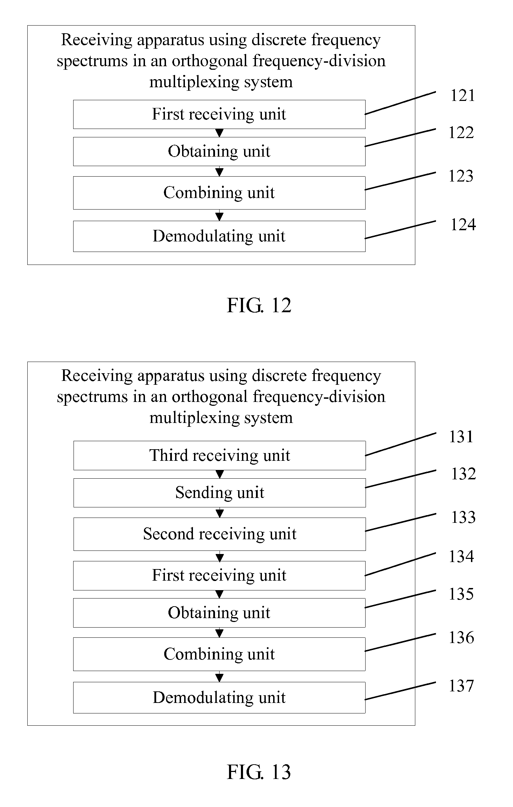

An embodiment of the present invention provides a receiving apparatus using discrete frequency spectrum in an orthogonal frequency division multiplexing system, which, as shown in FIG. 12, includes a first receiving unit 121, an obtaining unit 122, a combining unit 123, and a demodulating unit 124;
where the first receiving unit 121 is configured to receive an Xth carrier signal, where the Xth carrier signal is formed from a continuous Ath sub-carrier wave of one carrier wave, and A is a nonzero natural number;
the obtaining unit 122 is configured to obtain a time-domain component of each sub-discrete frequency spectrum from the Xth carrier signal;
the combining unit 123 is configured to combine the obtained time-domain component of each sub-discrete frequency spectrum into an Nth digital signal by performing a frequency shift operation; and
the demodulating unit 124 is configured to demodulate the Nth digital signal to obtain a signal borne by the Ath sub-carrier wave.

For the receiving apparatus using discrete frequency spectrum in an orthogonal frequency division multiplexing system according to the embodiment, a terminal receives an Xth carrier signal that is formed from a continuous Ath sub-carrier wave of one carrier wave. That is, a base station creates only one carrier wave for discrete frequency spectrum to be used, and maps each continuous sub-carrier wave of the carrier wave respectively to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

An embodiment of the present invention provides another receiving apparatus using discrete frequency spectrum in an orthogonal frequency division multiplexing system, which, as shown in FIG. 13, includes a third receiving unit 131, a sending unit 132, a second receiving unit 133, a first receiving unit 134, an obtaining unit 135, a combining unit 136, and a demodulating unit 137;
where the third receiving unit 131 is configured to receive a query message for querying terminal version information;
the sending unit 132 is configured to send a response message containing the terminal version information;
the second receiving unit 133 is configured to receive a notification message containing information about a corresponding relationship between the sub-carrier waves and the sub-discrete frequency spectrums;
the first receiving unit 134 is configured to receive an Mth carrier signal formed by combining the Xth carrier signal, where the Xth carrier signal is formed from a continuous Ath sub-carrier wave of one carrier wave, and A is a nonzero natural number;
the obtaining unit 135 is configured to obtain each sub-discrete frequency spectrum from the Xth carrier signal;
the combining unit 136 is configured to combine each obtained sub-discrete frequency spectrum into an Nth digital signal by performing a frequency shift operation; and
the demodulating unit 137 is configured to demodulate the Nth digital signal to obtain the Ath sub-carrier wave.

For the apparatus of using discrete frequency spectrums in an orthogonal frequency-division multiplexing system according to the embodiment, a terminal receives an Xth carrier signal that is formed from a continuous Ath sub-carrier wave of one carrier wave. That is, a base station creates only one carrier wave for discrete frequency spectrum to be used, and maps each continuous sub-carrier wave of the carrier wave respectively to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

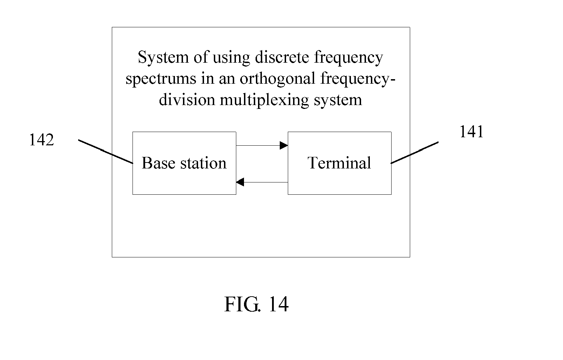

An embodiment of the present invention provides a system of using discrete frequency spectrum in an orthogonal frequency division multiplexing system, which, as shown in FIG. 14, includes a base station 141 and a terminal 142; where
the base station 141 is configured to create one carrier wave having a bandwidth that is greater than or equal to a bandwidth of discrete frequency spectrum to be used; map sub-carrier waves of the carrier wave respectively to each sub-discrete frequency spectrum according to requirements of the sub-discrete frequency spectrums of the discrete frequency spectrum to be used; form an Xth carrier signal from a sub-carrier wave corresponding to each sub-discrete frequency spectrum, where X is a nonzero natural number; send the Xth carrier signal to the terminal by using a radio frequency module; receive a Yth carrier signal sent by the terminal, where Y is a nonzero natural number; obtain each sub-discrete frequency spectrum from the Yth carrier signal; and combine each obtained sub-discrete frequency spectrum into a Kth digital signal by performing a frequency shift operation; and
the terminal 142 is configured to receive the Xth carrier signal; obtain each sub-discrete frequency spectrum from the Xth carrier signal; combine each obtained sub-discrete frequency spectrum into an Nth digital signal by performing a frequency shift operation; demodulate the Nth digital signal to obtain an Ath sub-carrier wave, where A is a nonzero natural number; map the Ath sub-carrier wave respectively to each sub-discrete frequency spectrum according to requirements of each sub-discrete frequency spectrum; form a Yth carrier signal from the Ath sub-carrier wave corresponding to each sub-discrete frequency spectrum, where Y is a nonzero natural number; and send the Yth carrier signal by using a radio frequency module.

For the system of using discrete frequency spectrum in an orthogonal frequency division multiplexing system according to the embodiment, a terminal receives an Xth carrier signal that is formed from a continuous Ath sub-carrier wave of one carrier wave. That is, a base station creates only one carrier wave for discrete frequency spectrum to be used, and maps each continuous sub-carrier wave of the carrier wave respectively to each sub-discrete frequency spectrum to be used. Because only one carrier wave is created, only one set of public channels such as paging channels is required, which improves the utilization rate of frequency spectrum; in addition, creating only one carrier wave simplifies the scheduling operation.

By the embodiments described above, persons skilled in the art may clearly understand that the present invention may be implemented by software with necessary common hardware. Indeed, the present invention may also be implemented by only hardware. However, the former is the preferred implementation mode. Based on such understanding, the essence of the technical solution of the present invention or the part of that makes a contribution to the prior art may be implemented in the form of software product. The computer software product is stored in a readable storage medium such as a computer floppy disk, a hard disk, or an optical disk, and includes multiple instructions to enable a computer equipment (which may be a personal computer, a server, or a network equipment) to execute the method described in embodiments of the present invention.

The above are only specific embodiments of the present invention. The protection scope of the present invention, however, is not limited thereto. Any alteration or substitution that is within the technical scope disclosed by the present invention and can easily occur to those skilled in the art should be covered in the protection scope of the present invention. Hence the protection scope of the present invention should be determined by the statements in Claims.

## Claims

1. A method of using discrete frequency spectrum in an orthogonal frequency division multiplexing system, **characterized by** comprising:
creating one carrier wave having a bandwidth that is greater than or equal to a bandwidth of a discrete frequency spectrum to be used;
mapping sub-carrier waves of the carrier wave respectively to each sub-discrete frequency spectrum;
forming an Xth carrier signal from the sub-carrier waves corresponding to each sub-discrete frequency spectrum, wherein X is a nonzero natural number; and
sending the Xth carrier signal to a terminal.

2. The method of using discrete frequency spectrum in an orthogonal frequency division multiplexing system according to claim 1, **characterized in that** the method further comprises:
sending a notification message containing information about a corresponding relationship between the sub-carrier waves and the sub-discrete frequency spectrums to the terminal.

3. The method of using discrete frequency spectrums in an orthogonal frequency division multiplexing system according to claim 2, **characterized in that** before sending the Xth carrier signal to the terminal, the method further comprises:
combining the Xth carrier signal into one path of Mth carrier signal; and
the sending the Xth carrier signal to the terminal comprises sending the Mth carrier signal to the terminal by using one radio frequency module.

4. The method of using discrete frequency spectrum in an orthogonal frequency division multiplexing system according to claim 1, **characterized in that** the method further comprises:
determining whether the terminal supports the method of using the discrete frequency spectrum in an orthogonal frequency division multiplexing system; and
when the terminal supports the method of using the discrete frequency spectrum in an orthogonal frequency division multiplexing system, scheduling the terminal preferentially on a sub-discrete frequency spectrum where a non-control channel is located; and
when the terminal does not support the method of using the discrete frequency spectrum in an orthogonal frequency division multiplexing system, scheduling the terminal only on a sub-discrete frequency spectrum where a control channel is located.

5. The method of using discrete frequency spectrum in an orthogonal frequency division multiplexing system according to claim 1, **characterized in that** the mapping the sub-carrier waves of the carrier wave respectively to each sub-discrete frequency spectrum comprises:
mapping a control channel of the carrier wave to a sub-discrete frequency spectrum having a biggest bandwidth among the sub-discrete frequency spectrums.

6. The method of using discrete frequency spectrum in an orthogonal frequency division multiplexing system according to claim 4, **characterized in that** before determining whether the terminal supports the method of using the discrete frequency spectrum in an orthogonal frequency division multiplexing system, the method further comprises:
sending a query message for querying terminal version information to the terminal; and
receiving a response message containing the terminal version information sent by the terminal;
wherein the determining whether the terminal supports the method of using the discrete frequency spectrum in an orthogonal frequency division multiplexing system comprises determining whether the terminal supports the method of using the discrete frequency spectrum in an orthogonal frequency division multiplexing system according to the terminal version information.

7. A receiving method of using discrete frequency spectrum in an orthogonal frequency division multiplexing system, **characterized by** comprising:
receiving an Xth carrier signal, wherein the Xth carrier signal is formed from a continuous Ath sub-carrier wave of one carrier wave, and A is a nonzero natural number;
obtaining a time-domain component of each sub-discrete frequency spectrum from the Xth carrier signal;
combining the obtained time-domain component of each sub-discrete frequency spectrum into an Nth digital signal by performing a frequency shift operation; and
demodulating the Nth digital signal to obtain a signal borne by the Ath sub-carrier wave.

8. The receiving method of using discrete frequency spectrum in an orthogonal frequency division multiplexing system according to claim 7, **characterized in that** the method further comprises:
receiving a notification message containing information about a corresponding relationship between the sub-carrier waves and the sub-discrete frequency spectrums.

9. The receiving method of using discrete frequency spectrum in an orthogonal frequency division multiplexing system according to claim 8, **characterized in that** before the receiving a notification message containing a corresponding relationship between the sub-carrier waves and the sub-discrete frequency spectrums, the method further comprises:
receiving a query message for querying terminal version information; and
sending a response message containing the terminal version information.

10. The receiving method of using discrete frequency spectrum in an orthogonal frequency division multiplexing system according to any one of claims 7 to 9, **characterized in that** the receiving the Xth carrier signal comprises receiving an path of Mth carrier signal formed by combining the Xth carrier signal.

11. An apparatus of using discrete frequency spectrum in an orthogonal frequency division multiplexing system, comprising:
a creating unit, configured to create one carrier wave having a bandwidth that is greater than or equal to a bandwidth of discrete frequency spectrum to be used;
a mapping unit, configured to map sub-carrier waves of the carrier wave respectively to each sub-discrete frequency spectrum;
a signal forming unit, configured to form an Xth carrier signal from the sub-carrier wave corresponding to each sub-discrete frequency spectrum, wherein X is a nonzero natural number; and
a sending unit, configured to send the Xth carrier signal to a terminal.

12. The apparatus of using discrete frequency spectrum in an orthogonal frequency division multiplexing system according to claim 11, **characterized in that**
the sending unit is further configured to send a notification message containing information about a corresponding relationship between the sub-carrier waves and the sub-discrete frequency spectrums to the terminal.

13. The apparatus of using discrete frequency spectrum in an orthogonal frequency division multiplexing system according to claim 12, **characterized in that** the apparatus of using the discrete frequency spectrum in an orthogonal frequency division multiplexing system further comprises:
a combining unit, configured to combine the Xth carrier signal into one path of Mth carrier signal; and
the sending, by the sending unit, the Xth carrier signal to the terminal comprises sending, by the sending unit, the Mth carrier signal to the terminal by using one radio frequency module.

14. The apparatus of using discrete frequency spectrum in an orthogonal frequency division multiplexing system according to claim 11, **characterized in that** the apparatus of using the discrete frequency spectrum in an orthogonal frequency division multiplexing system further comprises:
a determining unit, configured to determine whether the terminal supports a method of using discrete frequency spectrum in an orthogonal frequency division multiplexing system; and
a scheduling unit, configured to, when the terminal supports the method of using discrete frequency spectrum in an orthogonal frequency division multiplexing system, schedule the terminal preferentially on a sub-discrete frequency spectrum where a non-control channel is located; and
when the terminal does not support the method of using discrete frequency spectrum in an orthogonal frequency division multiplexing system, schedule the terminal only on a sub-discrete frequency spectrum where a control channel is located.

15. The apparatus of using discrete frequency spectrum in an orthogonal frequency division multiplexing system according to claim 11, **characterized in that** the mapping unit is further configured to map a control channel of the carrier wave to a sub-discrete frequency spectrum having a biggest bandwidth among the sub-discrete frequency spectrums.

16. The apparatus of using discrete frequency spectrum in an orthogonal frequency division multiplexing system according to claim 14, **characterized in that** the apparatus of using discrete frequency spectrum in an orthogonal frequency division multiplexing system further comprises:
a receiving unit, configured to receive a response message containing terminal version information sent by the terminal; and
the determining, by the determining unit, whether the terminal supports the method of using discrete frequency spectrum in an orthogonal frequency division multiplexing system comprises: determining, by the determining unit, whether the terminal supports the method of using discrete frequency spectrum in an orthogonal frequency division multiplexing system according to the terminal version information; and
the sending unit is further configured to send a query message for querying the terminal version information to the terminal.

17. A receiving apparatus of using discrete frequency spectrum in an orthogonal frequency division multiplexing system, **characterized by** comprising:
a first receiving unit, configured to receive an Xth carrier signal, wherein the Xth carrier signal is formed from a continuous Ath sub-carrier wave of one carrier wave, and A is a nonzero natural number;
an obtaining unit, configured to obtain a time-domain component of each sub-discrete frequency spectrum from the Xth carrier signal;
a combining unit, configured to combine the obtained time-domain component of each sub-discrete frequency spectrum into an Nth digital signal by performing a frequency shift operation; and
a demodulating unit, configured to demodulate the Nth digital signal to obtain a signal borne by the Ath sub-carrier wave.

18. The receiving apparatus of using discrete frequency spectrum in an orthogonal frequency division multiplexing system according to claim 17, **characterized in that** the receiving apparatus of using discrete frequency spectrum in an orthogonal frequency division multiplexing system further comprises:
a second receiving unit, configured to receive a notification message containing information about a corresponding relationship between the sub-carrier waves and the sub-discrete frequency spectrums.

19. The receiving apparatus of using discrete frequency spectrum in an orthogonal frequency division multiplexing system according to claim 18, **characterized in that** the receiving apparatus of using discrete frequency spectrum in an orthogonal frequency division multiplexing system further comprises:
a third receiving unit, configured to receive a query message for querying terminal version information; and
a sending unit, configured to send a response message containing the terminal version information.

20. The receiving apparatus of using discrete frequency spectrum in an orthogonal frequency division multiplexing system according to any one of claims 17 to 19, **characterized in that** the receiving, by the first receiving unit, the Xth carrier signal comprises receiving, by the first receiving unit, an Mth carrier signal formed by combining the Xth carrier signal.
